# FASCICULE DE BREVET EUROPEEN

(11) **EP 0 390 618 B1**
(45) Date de publication et mention de la délivrance du brevet: **04.08.1993**
(21) Numéro de dépôt: 90400370.4
(22) Date de dépôt: 12.02.1990
(51) Int. Cl.: E05F 15/00

(54) **Détecteur d'obstacle**
Hindernisdetektor
Obstacle detector

(30) Priorité: 13.02.1989 FR 8901817
(43) Date de publication de la demande: 03.10.1990
(73) Titulaire: JAEGER, F-92303 Levallois-Perret (FR)
(72) Inventeur: Chardon, Jérôme, F-95100 Argenteuil (FR)
(74) Mandataire: Martin, Jean-Jacques

(56) Documents cités:
- EP-A- 0 092 178
- EP-A- 0 118 074
- FR-A- 2 029 134
- FR-A- 2 155 729
- US-A- 4 562 387

## Description

La présente invention concerne le domaine des dispositifs de sécurité. Elle concerne plus précisément un détecteur d'obstacle apte à détecter la présence d'un obstacle intercalé entre un cadre ou châssis et un organe mobile associé.

La présente invention trouve en particulier application dans la détection d'obstacles intercalés sur le trajet de déplacement de vitres de véhicule automobile entraînées électriquement.

On a déjà proposé de nombreux détecteurs d'obstacle destinés à répondre à la fonction précitée. Les détecteurs d'obstacle comprennent généralement un corps allongé souple et déformable solidaire du cadre ou de l'organe mobile, de sorte que le corps soit déformé lorsqu'un obstacle prend appui sur lui.

De tels détecteurs d'obstacle sont par exemple décrits dans les documents FR-A-2 141 675, FR-A-2 563 565, DE-A-2 246 337, FR-A-2 155 729, FR-A-2 564 971, FR-A-2 089 278, FR-A-2 171 871, EP-A-015 393, EP-A-0 104 414, EP-A-195 908, DE-A-2 142 370, DE-A-2 643 505, DE-A-3 424 581, DE-A-3 304 400, DE-A-2 719 438, US-A-3 812 313, US-A-4 115 952, US-A-3 710 050, US-A-3 113 167, US-A-3 118 984, US-A-3 154 303 et FR-A-2029134.

Les détecteurs d'obstacle décrits dans les documents FR-A-2 141 675, FR-A-2029134 et FR-A-2 563 565 comprennent un tube souple déformable étanche contenant un fluide gazeux ou liquide et pourvu en extrémité d'un interrupteur à commande pneumatique ou hydraulique sensible aux déformations du tube.

Les détecteurs d'obstacle décrits dans le document DE-A-2 246 337 comprennent un tube souple déformable associé à des transducteurs d'ultrasons.

Les détecteurs d'obstacle décrits dans les autres documents précités ainsi que dans le document FR-A-2029134 comprennent deux pistes électriquement conductrices maintenues séparées au repos par des moyens souples élastiques. Lorsqu'une pression due à un obstacle intercalé est exercée sur le détecteur d'obstacle, la déformation résultante des pistes porte celles-ci en contact. La commutation ainsi réalisée peut être utilisée par exemple pour générer une alarme ou inverser le sens de déplacement de l'organe mobile.

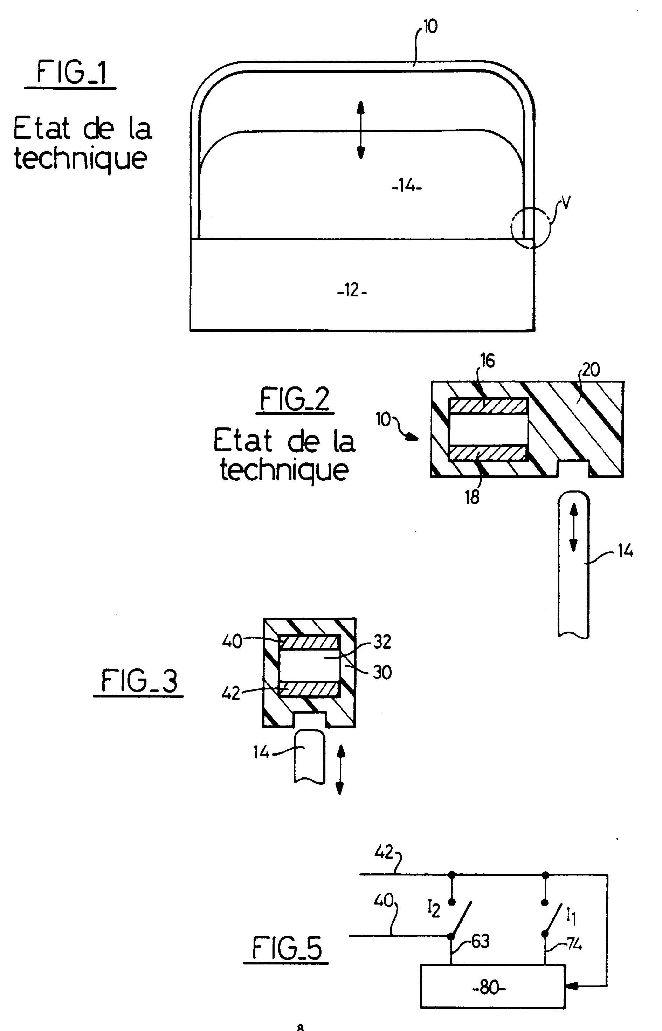

On a ainsi représenté schématiquement sur la figure 1 annexée, un dispositif détecteur d'obstacle 10 placé sur le cadre d'une portière 12 de véhicule automobile pour détecter la présence éventuelle d'un obstacle intercalé sur le trajet de déplacement d'une vitre 14 entraînée électriquement.

Dans le cadre de cette application spécifique aux véhicules automobiles on a proposé d'intégrer les dispositifs détecteurs d'obstacle à la coulisse en matériau souple recevant le bord de la vitre à l'état fermé ou de fixer les dispositifs détecteurs d'obstacle sur cette coulisse.

On a par exemple représenté sur la figure 2 annexée une disposition connue (voir par exemple EP-A-0 015 393 et DE-34 24 581) d'un détecteur à deux pistes électriquement conductrices 16, 18 intégrées à une coulisse 20.

On notera que comme représenté sur la figure 2, les dispositifs détecteurs d'obstacle, quelle que soit leur nature, ont toujours été placés non pas en regard de la tranche de l'organe mobile, mais décalés latéralement par rapport à celle-ci, pour éviter que ces dispositifs ne soient actionnés lorsque l'organe mobile atteint sa position de fermeture.

Cependant, une telle disposition des dispositifs de détection ne donne pas entière satisfaction.

Elle conduit à la réalisation de systèmes encombrants.

Elle exige l'utilisation de deux dispositifs détecteurs placés respectivement de part et d'autre de l'organe mobile (voir par exemple FR-A-2 155 729 et FR-A-2 171 871) pour détecter efficacement des obstacles provenant soit de l'intérieur, soit de l'extérieur du véhicule.

Elle rend également le dispositif de sécurité très vulnérable à une intervention frauduleuse, par exemple l'insertion d'un corps étranger électriquement conducteur entres les pistes 16, 18, pour ouvrir frauduleusement la vitre 14.

Dans la pratique, on constate que malgré les nombreux intérêts de ces systèmes détecteurs d'obstacle et malgré les nombreuses recherches conduites en la matière, comme en témoignent les nombreux documents cités ci-dessus, de tels détecteurs ne sont pas développés et utilisés industriellement de nos jours en raison des différents inconvénients précités.

Il existe pourtant une demande importante, en particulier dans le domaine automobile où les vitres à commande électrique tendent à se généraliser.

Le document EP-A-0118074 concerne un dispositif de sécurité pour la commande électrique d'un moteur de vitre de véhicules. Ce dispositif de sécurité comprend des moyens de surveillance de l'intensité du courant consommé par le moteur et deux capteurs de position aptes à détecter des positions extrêmes d'ouverture et de fermeture de la vitre. Les moyens de commande imposent un déplacement de la vitre dans le sens d'une ouverture lorsque les moyens de surveillance détectent le dépassement d'un seuil d'intensité prédéterminé alors que les deux capteurs ne détectent pas la vitre soit en position d'ouverture, soit en position de fermeture.

La présente invention a pour but d'améliorer la situation en proposant un nouveau système détecteur d'obstacle qui élimine les inconvénients précités, en particulier qui permette de réduire l'encombrement du système, de permettre une détection fiable avec un seul détecteur d'obstacle, et/ou de rendre plus difficile les interventions frauduleuses sur le dispositif détecteur.

Ces buts sont atteints selon la présente invention grâce à un système détecteur d'un obstacle intercalé entre un cadre et un organe mobile associé, du type comprenant un dispositif détecteur d'obstacle qui comporte un corps allongé souple et déformable solidaire du cadre ou de l'organe mobile, qui possède deux pistes électriquement conductrices maintenues à distance au repos par des moyens souples élastiques, caractérisé par le fait que l'une des pistes est sectionnée à distance de l'extrémité du dispositif détecteur d'obstacle, qu'une incurvation est appliquée au dispositif détecteur d'obstacle par une semelle fixe de façon à s'étendre en regard du trajet en déplacement de l'organe mobile entre le sectionnement de ladite piste et l'extrémité du dispositif et qu'un insert est placé du côté de l'incurvation opposé à l'extrémité du dispositif et porte un élément conducteur venant en contact avec la piste sectionnée au-delà de l'incurvation, de sorte que la portion des pistes placée entre l'insert et l'extrémité du dispositif forme un interrupteur capteur de position de l'organe mobile apte à mettre hors service le dispositif détecteur d'obstacle lorsque l'organe mobile atteint la position d'obturation.

D'autres modes de réalisation selon l'invention sont indiqués dans les revendications 2 à 9.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1 et 2 précédemment décrites illustrent l'état de la technique,
- la figure 3 représente une vue schématique en coupe transversale d'un dispositif détecteur conforme à la présente invention,
- les figures 4a et 4b représentent deux vues en coupe longitudinale d'une partie extrême d'un dispositif détecteur conforme à la présente invention,
- la figure 5 représente le schéma électrique du système ainsi obtenu.

On aperçoit sur la figure 3 annexée une coulisse 30 réalisée, de façon connue en soi, en un matériau souple élastique, par exemple un élastomère, et destiné à recevoir le bord d'une vitre 14 déplacée par un organe motorisé à commande électrique.

La coulisse 30 incorpore un détecteur d'obstacle conforme à la présente invention comprenant deux pistes électriquement conductrices 40, 42. Les pistes 40, 42, sont placées sur des faces opposées de la surface interne d'une chambre 32 ménagée dans la coulisse 30. Plus précisément la chambre 32 ainsi que les pistes 40, 42, sont placées en regard de la tranche de la vitre 14. Les pistes 40, 42, sont placées de part et d'autre d'un plan qui s'étend transversalement à la direction de déplacement de la vitre 14.

Si un obstacle est intercalé sur le trajet de déplacement de la vitre 14, lorsque celle-ci est entraînée vers sa position de fermeture, la pression exercée sur le détecteur porte les deux pistes 40, 42 en contact. La commutation ainsi réalisée permet de générer une alarme, ou d'inverser le sens de déplacement de la vitre 14 pour dégager l'obstacle.

En revanche, si aucun obstacle n'est intercalé, le détecteur formé des deux pistes 40, 42, est mis hors service par le capteur de position proposé dans le cadre de la présente invention, lorsque le bord de la vitre 14 atteint la coulisse comme représenté sur la figure 3, c'est-à-dire lorsque la vitre 14 atteint la position d'obturation. Une déformation ultérieure de la coulisse 30 et une mise en contact consécutive des pistes 40, 42, par la vitre 14 elle-même est alors sans effet.

On notera que le système représenté sur la figure 3 est nettement moins encombrant que les dispositions classiques du type illustré sur la figure 2.

Par ailleurs la présente invention autorise une détection fiable, avec un seul détecteur, quelle que soit l'origine, intérieure au véhicule ou extérieure, des obstacles.

Enfin, dans la mesure où le détecteur est placé dans la coulisse 30 en regard de la tranche de la vitre 14, les tentatives d'intervention frauduleuse sur le détecteur d'obstacle sont rendues très difficiles.

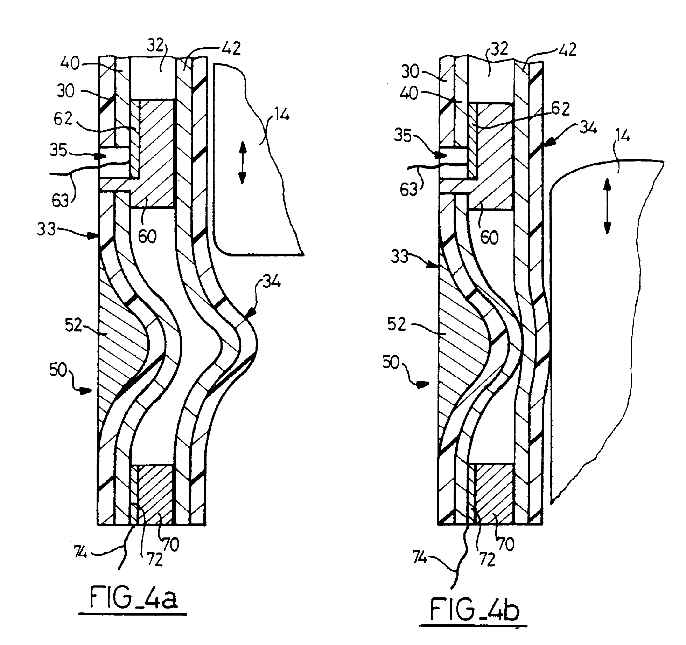

On a représenté sur les figures 4a et 4b, en coupe longitudinale, l'extrêmité d'une portion verticale du détecteur telle que référencée par exemple V sur la figure 1.

On reconnaît sur les figures 4a et 4b le corps 30 de la coulisse qui porte les deux pistes 40, 42.

Le détecteur d'obstacle ainsi formé fait l'objet d'une incurvation 50 au voisinage de son extrémité. Cette incurvation peut être générée par exemple par une semelle 52 placée contre la face externe 33 de la coulisse 30.

La hauteur de la semelle 52 est telle que, au niveau de l'incurvation 50, la surface interne 34 de la coulisse soit placée en regard du trajet en déplacement de la vitre 14.

Plus précisément encore, la hauteur de la semelle 52 et donc l'amplitude de l'incurvation 50 sont telles que lorsque la vitre 14 est placée en regard de l'incurvation 50, les pistes 40, 42, soient portées en contact comme représenté sur la figure 4b.

Selon la représentation donnée sur les figures annexées une découpe 35 est réalisée latéralement dans la coulisse 30 pour sectionner l'une des pistes, la piste 40 en l'espèce. La découpe 35 est réalisée du côté de l'incurvation 50 opposé à l'extrémité du dispositif détecteur. Un insert 60 en matériau électriquement isolant est introduit dans la chambre 32 de la coulisse 30, par la découpe 35. L'insert 60 porte un élément 62 électriquement conducteur. Cet élément 62 vient ainsi en contact électrique avec la portion principale de la piste 40 éloignée de l'incurvation 50. On notera qu'il est indispensable que l'élément 62 électriquement conducteur ne vienne pas en contact avec la portion de la piste 40 correspondant à l'incurvation 50. L'élément électriquement conducteur 62 est relié à une liaison électrique 63 accessible à l'extérieur de la coulisse. De préférence la liaison 63 passe par la découpe 35. Le cas échéant, la liaison 63, sous réserve qu'elle soit électriquement isolée des pistes 40, 42, pourrait sortir axialement par l'intermédiaire de la chambre 32.

De même, on peut envisager d'engager l'insert 60 dans la chambre 32, non pas par une découpe latérale 35, mais axialement par la chambre 32, sous réserve que des dispositions soient prises pour sectionner l'une des pistes, comme cela est représenté pour la piste 40 sur les figures annexées.

Par ailleurs un noyau 70 est engagé axialement dans la chambre 32 à l'extrémité de la coulisse 30.

Le noyau 70 est réalisé en un matériau isolant. Il porte un élément électriquement conducteur 72 conçu pour venir en contact avec la portion de piste isolée grâce au sectionnement précité, soit, selon la représentation donnée sur les figures 4a, 4b, la portion de la piste 40 située au niveau de l'incurvation 50. L'élément électriquement conducteur 72 est raccordé à une liaison électrique 74 accessible à l'extérieur de la coulisse 30.

Les portions des pistes 40, 42, situées entre l'insert 60 et le noyau 70 forment un interrupteur I1 servant de capteur de position. En effet, ces portions des pistes 40, 42, forment un interrupteur ouvert, comme représenté sur la figure 4a lorsque la vitre atteint sa position de fermeture et par contre fermée comme représenté sur la figure 4b, lorsque la vitre 14 est placée en position ouverte.

On notera que le cas échéant, l'interrupteur servant de capteur de position, formé par les portions précitées des pistes 40, 42, peut être à l'état ouvert lorsque la vitre 14 dépasse un seuil d'ouverture.

Les portions des pistes 40, 42, placées au-delà de l'insert 60 forment de façon connue en soi un interrupteur I2 servant de détecteur d'obstacle.

Cet interrupteur se ferme lorsqu'un obstacle est intercalé sur le trajet de déplacement de la vitre et que celle-ci est déplacée à la fermeture.

Les interrupteurs I1 et I2 précités, servant respectivement de capteur de position et de détecteur d'obstacle sont reliés en série entre les liaisons électriques 63 et 74, comme représenté sur la figure 5. Ainsi, il apparaîtra clairement à l'homme de l'art que le capteur de position formé par l'interrupteur 11 valide le détecteur d'obstacle 12 uniquement lorsque la vitre 14 n'est pas en position de fermeture, c'est-à-dire lorsqu'un obstacle est susceptible d'être intercalé sur le trajet de déplacement de cette vitre. Inversement lorsque la vitre 14 atteint sa position d'obturation, et que par conséquent aucun obstacle ne peut plus être intercalé sur son trajet, et que la fermeture de l'interrupteur 12 ne peut être due qu'à la vitre 14 elle-même, cet interrupteur 12 servant de détecteur d'obstacle est mis hors service par le capteur de position en raison de l'ouverture automatique de l'interrupteur I1.

On représenté schématiquement sur la figure 5 des moyens de commande 80 branchés entre les liaisons filaires 63 et 74 pour générer une alarme ou inverser le sens de déplacement de la vitre 14 lorsque les interrupteurs I1 et I2 sont fermés simultanément.

On notera que l'insert 60 et/ou le noyau 70, assure une bonne étanchéité du dispositif détecteur.

Le cas échéant, chacun des insert ou noyau 60,70, peut être pourvu d'un prolongement électriquement isolant, pour éviter une mise en contact intempestive des pistes 40, 42.

Le détecteur d'obstacle conforme à la présente invention peut être réalisé à l'aide de tout moyen classique approprié.

Par exemple, les pistes 40, 42, et la coulisse 30 peuvent être coextrudées et être formées à base du même matériau, moyennant l'apport supplémentaire de charges électriquement conductrices contrôlées pour les pistes 40, 42.

On notera également que le point commun aux interrupteurs I1 et I2, c'est-à-dire la piste 42 selon le mode de réalisation représenté sur les figures annexées peut être raccordée aux moyens de commande 80 de sorte que ceux-ci puissent surveiller séparément l'état des deux interrupteurs I1, I2, afin de contrôler ainsi le bon état de fonctionnement du dispositif détecteur d'obstacle I2, et ainsi surveiller indirectement les tentatives d'intervention frauduleuse sur ce dispositif.

Selon le mode de réalisation représenté sur les figures 4a et 4b un contact électrique avec la piste 42 peut être aisément réalisé puisque cette piste 42 est accessible à l'extrémité de la coulisse 30.

A titre d'exemple non limitatif, on peut prévoir que les moyens de commande 80 contrôlent que l'interrupteur détecteur d'obstacle I2 est bien à l'état ouvert lorsque l'interrupteur capteur de position I1 passe de l'état ouvert à l'état fermé. La détection d'un interrupteur détecteur de position I2 à l'état fermé lorsque l'interrupteur capteur de position I1 passe de l'état ouvert à l'état fermé correspond en effet le plus souvent à un détecteur d'obstacle déficient, ayant subi par exemple une intervention frauduleuse par insertion d'un corps étranger électriquement conducteur entre les pistes 40, 42.

Les moyens de commande 80 peuvent également surveiller que l'interrupteur I2 ne passe pas de l'état fermé à l'état ouvert sans que l'interrupteur I1 passe inversement de l'état ouvert à l'état fermé. Dans le cas contraire, une alerte peut être générée (ou peut être par exemple dans le cas d'un bris de vitre).

En conclusion les moyens de commande 80 peuvent contrôler que la multiplication logique des états des interrupteurs I1 et I2 donne un résultat nul.

La présente invention n'est pas limitée à la détection d'obstacle intercalé sur le trajet en déplacement d'une vitre d'un véhicule automobile mais s'étend à la détection d'obstacle en regard de tout organe mobile. Par ailleurs, le dispositif détecteur d'obstacle n'est pas nécessairement placé dans la coulisse 30. Il peut être fixé sur celle-ci. Le dispositif détecteur d'obstacle peut également être prévu sur l'organe mobile 14 et non pas sur le cadre fixe.

## Revendications

1. Système détecteur d'un obstacle intercalé entre un cadre et un organe mobile associé du type comprenant un dispositif détecteur d'obstacle comportant un corps allongé souple et déformable solidaire du cadre ou de l'organe mobile, qui possède deux pistes électriquement conductrices (40, 42) maintenues à distance au repos par des moyens souples élastiques (30) caractérisé par le fait que l'une des pistes (40) est sectionnée à distance de l'extrémité du dispositif détecteur d'obstacle qu'une incurvation (50) est appliquée au dispositif détecteur d'obstacle par une semelle fixe (52) de façon à s'étendre en regard du trajet en déplacement de l'organe mobile (14) entre le sectionnement de ladite piste et l'extrémité du dispositif et qu'un insert (60) est placé du côté de l'incurvation (50) opposée à l'extrémité du dispositif et porte un élément conducteur (62) venant en contact avec la piste (40) sectionnée au-delà de l'incurvation (50), de sorte que la portion des pistes (40,42) placée entre l'insert (60) et l'extrémité du dispositif forme un interrupteur capteur de position de l'organe mobile (40, 42 ; 94, 42) apte à mettre hors service le dispositif détecteur d'obstacle lorsque l'organe mobile (14) atteint la position d'obturation.

2. Système détecteur d'obstacle selon la revendication 1, caractérisé par le fait que les pistes (40, 42) placées au-delà de l'insert (60) forment un interrupteur (12) détecteur d'obstacle.

3. Système détecteur d'obstacle selon l'une des revendications 1 ou 2, caractérisé par le fait qu'il comprend au moins un noyau (70) engagé axialement sur l'extrémité du dispositif pour assurer l'étanchéité de celui-ci et qui porte un élément conducteur (72) destiné à venir en contact avec l'une des pistes (40).

4. Système détecteur d'obstacle selon l'une des revendications 1 à 3, caractérisé par le fait que le dispositif détecteur d'obstacle est incorporé à la coulisse (30) recevant le bord d'une vitre de véhicule automobile.

5. Système détecteur d'obstacle selon l'une des revendications 1 à 4, caractérisé par le fait que les deux pistes électriquement conductrices (40, 42) sont placées dans une coulisse (30) et coextrudées avec celles-ci, dans le même matériau, moyennant l'apport contrôlé de charges électriquement conductrices.

6. Système détecteur d'obstacle selon l'une des revendications 1 à 5, caractérisé par le fait qu'il comprend des moyens de commande (80) aptes à surveiller séparément l'état du dispositif détecteur d'obstacle (40, 42) et du capteur de position.

7. Système détecteur d'obstacle selon la revendication 6 prise en combinaison avec l'une des revendications 1 à 5, caractérisé par le fait que les moyens de commande (80) sont adaptés pour générer une alarme lorsque les deux pistes électriquement conductrices (40, 42) formant détecteur d'obstacle (I2) sont en contact au moment où les moyens formant capteur de position détectent que l'organe mobile (14) s'écarte de sa position d'obturation.

8. Système détecteur d'obstacle selon la revendication 6 prise en combinaison avec l'une des revendications 1 à 5 et 7, caractérisé par le fait que les moyens de commande (80) sont adaptés pour générer une alarme lorsque les deux pistes électriquement conductrices (40, 42) formant détecteur d'obstacle (I2) se séparent sans que le capteur de position (I1) détecte que l'organe mobile (14) s'écarte de sa position d'obturation.

9. Système détecteur d'obstacle selon l'une des revendications 6 à 8, caractérisé par le fait que les moyens de commande (80) contrôlent que la multiplication logique des interrupteurs (I1) et (I2) formés respectivement par les moyens formant capteur de position et les pistes électriquement conductrices donne un résultat nul.

## Patentansprüche

1. Detektoranordnung zum Erfassen eines Hindernisses zwischen einem Rahmen und einem zugehörigen beweglichen Element mit einer Hindernisdetektoreinrichtung, die einen langgestreckten, flexiblen und verformbaren Körper umfaßt, der fest am Rahmen oder am beweglichen Element angebracht ist und zwei elektrische Leiterbahnen (40, 42) aufweist, die mittels elastischer biegsamer Einrichtungen (30) im Ruhezustand im Abstand gehalten sind, dadurch gekennzeichnet, daß eine der Leiterbahnen (40) in einem Abstand vom Ende der Hindernisdetektoreinrichtung aufgetrennt ist, der Hindernisdetektoreinrichtung durch eine feste Schwelle (52) eine Krümmung (50) gegeben ist, derart, daß sie sich in der Bewegungsbahn des beweglichen Elementes (14) zwischen der Trennstelle der genannten Leiterbahn und dem Ende der Detektoreinrichtung befindet, und ein Einsatz (60) an demjenigen Rand der Krümmung (50) angeordnet ist, der dem Ende der Detektoreinrichtung gegenüberliegt, und ein Leiterelement (62) trägt, das in Kontakt mit der aufgetrennten Leiterbahn (40) jenseits der Krümmung (50) steht, derart, daß der Teil der Leiterbahnen (40, 42), der sich zwischen dem Einsatz (60) und dem Ende der Detektoreinrichtung befindet, einen Meßfühlerschalter für die Position des beweglichen Elementes (40, 42; 94, 42) bildet, der die Detektoreinrichtug außer Funktion setzt, wenn das bewegliche Element (14) die Schließstellung erreicht.

2. Detektoranordnung zum Erfassen eines Hindernisses nach Anspruch 1 dadurch gekennzeichnet, daß die Leiterbahnen (40, 42) die jenseits des Einsatzes (60) angeordnet sind, einen Hindernisdetektorschalter (12) bilden.

3. Detektoranordnung zum Erfassen eines Hindernisses nach Anspruch 1 oder 2, dadurch gekennzeichnet, daß sie wenigstens einen Kern (70) enthält, der axial am Ende der Detektoreinrichtug sitzt, um deren Dichtheit sicherzustellen und der ein Leiterelement (72) trägt, daß dazu bestimmt ist, einen Kontakt mit einer der Leiterbahnen (40) zu halten.

4. Detektoranordnung zum Erfassen eines Hindernisses nach einem der Ansprüche 1-3 dadurch gekennzeichnet, daß die Hindernisdetektoreinrichtung in eine Gleitführung (30) eingebaut ist, die den Rand einer Fensterscheibe eines Kraftfahrzeuges aufnimmt.

5. Dektektoranordnung zum Erfassen eines Hindernisses nach einem der Ansprüche 1-4 dadurch gekennzeichnet, daß die beiden elektrischen Leiterbahnen (40, 42) in der Gleitführung (30) angeordnet sind und zusammen damit aus dem gleichen Material bei einer gesteuerten Zugabe von elektrisch leitenden Zuschlagsstoffen koextrudiert sind.

6. Detektoranordnung zum Erfassen eines Hindernisses nach einem der Ansprüche 1-5 dadurch gekennzeichnet, daß sie Steuereinrichtungen (80) umfaßt, die separat den Zustand der Hindernisdetektoreinrichtung (40, 42) und des Positionsmeßfühlers überwachen können.

7. Detektoranordnung zum Erfassen eines Hindernisses nach Anspruch 6 in Kombination mit einem der Ansprüche 1-5, dadurch gekennzeichnet, daß die Steuereinrichtungen (80) so ausgebildet sind, daß sie ein Alarmsignal erzeugen, wenn beide elektrischen Leiterbahnen (40, 42), die den Hindernisdetektor (I2) bilden, in dem Moment in Kontakt stehen, in dem die Einrichtungen, die den Positionsmeßfühler bilden, feststellen, daß das bewegliche Element (14) seine Schließstellung verlassen hat.

8. Detektoranordnung zum Erfassen eines Hindernisses nach Anspruch 6, in Kombination mit einem der Ansprüche 1-5 und 7, dadurch gekennzeichnet, daß die Steuereinrichtungen (80) so ausgebildet sind, daß sie ein Alarmsignal erzeugen, wenn die beiden elektrischen Leiterbahnen (40, 42), die den Hindernisdetektor (I2) bilden, sich trennen, ohne daß der Positionsmeßfühler (I1) feststellt, daß das bewegliche Element (14) seine Schließstellung verlassen hat.

9. Detektoranordnung zum Erfassen eines Hindernisses nach einem der Ansprüche 6-8 dadurch gekennzeichnet, daß die Steuereinrichtungen (80) so arbeiten, daß das logische Produkt der Schalter (I1) und (I2), die jeweils von den Einrichtungen, die den Positionsmeßfühler bilden, und den elektrischen Leiterbahnen gebildet sind, gleich 0 ist.

## Claims

1. A system for detecting an obstacle interposed between a moving member and a frame associated therewith, the system being of the type comprising an obstacle detector device including a flexible and deformable elongate body fixed to the frame or the moving member and possessing two electrically-conductive tracks (40,42) held apart at rest by resilient flexible means (30), the system being characterized by the fact that one of the tracks (40) is cut at a distance from the end of the obstacle detector device, in that curvature (50) is applied to the obstacle detector device by a fixed bulge (52) to cause it to extend into the displacement path of the moving member (14) between the cut of the track and the end of the device, and in that an insert (60) is placed on the side of the curvature (50) which is furthest from the end of the device, the insert carrying a conductor element (62) making contact with the cut track (40) beyond the curvature (50), so that the part of the tracks (40,42) provided between the insert (60) and the end of the device forms, a moving member position switch sensor (40,42 ; 94,42) suitable for rendering the obstacle detector device inoperative when the moving member (14) reaches its closed position.

2. An obstacle detector system according to claim 1, characterized by the fact that the tracks (40,42) placed beyong the insert (60) constitute an obstacle detector switch (I2).

3. An obstacle detector system according to any one of claims 1 or 2, characterized by the fact that it includes at least one plug (70) engaged axially at the end of the detector device for sealing it, the plug carrying an electrically-conductive element (72) intended to make contact with one of the tracks (40).

4. An obstacle detector system according to any one of claims 1 to 3, characterized by the fact that the obstacle detector device is incorporated in the slideway (30) receiving the edge of a window in a motor vehicle.

5. An obstacle detector system according to any one of claims 1 to 4, characterized by the fact that the two electrically-conductive tracks (40,42) are placed in a slideway (30) and are coextruded therewith, being made of the same material, but having a controlled quantity of electrically-conductive filler added thereto.

6. An obstacle detector system according to any one of claims 1 to 5, characterized by the fact that it includes control means (80) suitable for separately monitoring the state of the obstacle detector device (40,42) and of the position sensor.

7. An obstacle detector system according to claim 6, taken in combination with any one of claims 1 to 5, characterized by the fact that the control means (80) are suitable for generating an alarm when the two electrically-conductive tracks (40,42) constituting the obstacle detector (I2) are in contact at the moment when the means constituting the position sensor detect that the moving member (14) is away from its closed position.

8. An obstacle detector system according to claim 6, taken in combination with any one of claims 1 to 5 and 7, characterized by the fact that the control means (80) are suitable for generating an alarm when the two electrically - conductive tracks (40,42) constituting the obstacle detector (I2) separate without the position sensor (I1) detecting that the moving member (14) has moved away from its closed position.

9. An obstacle detector system according to any one of claims 6 to 8, characterized by the fact that the control means (80) verify that logical multiplication of the switches (I1 and I2) respectively formed by the means forming the position sensor and by the electrically-conductive tracks gives a zero result.
